# EUROPÄISCHE PATENTSCHRIFT

(11) **EP 1 697 675 B1**
(45) Veröffentlichungstag und Bekanntmachung des Hinweises auf die Patenterteilung: **16.02.2011**
(21) Anmeldenummer: 04804926.6
(22) Anmeldetag: 17.12.2004
(51) Int. Cl.: F16L 37/092

(54) **STECKVERBINDER FÜR MEDIENLEITUNGEN**
PLUG CONNECTOR FOR FLUID CONDUITS
RACCORD A EMBOITEMENT POUR CONDUITES DE FLUIDE

(30) Priorität: 23.12.2003 DE 20319959 U
(43) Veröffentlichungstag der Anmeldung: 06.09.2006
(73) Patentinhaber: Voss Automotive GmbH, 51688 Wipperfürth (DE)
(72) Erfinder: SALOMON-BAHLS, Bernd, 58553 Halver (DE); DRESEN, Dirk, 51375 Leverkusen (DE); HÜPGEN, Ingo, 51515 Kürten (DE)
(74) Vertreter: Patentanwälte Dr. Solf & Zapf
(86) Internationale Anmeldenummer: PCT/EP2004/053588
(87) Internationale Veröffentlichungsnummer: WO 2005/064222

(56) Entgegenhaltungen:
- EP-A- 0 733 844
- US-A1- 2003 178 846
- US-B1- 6 447 019

## Beschreibung

Die vorliegende Erfindung betrifft einen Steckverbinder für Medienleitungen gemäß dem Oberbegriff des Anspruchs 1.

Die EP 0 733 844 B1 beschreibt eine solche Anschlußvorrichtung mit den Merkmalen des Oberbegriffs des Anspruchs 1. Die Zweiteiligkeit des Gehäuseteils ermöglicht eine einfache Montage und Demontage sowie ein Lösen des Einsteckteils. Das Einsatzteil besteht aus einem einstückigen Kunststoff-Formteil, wobei eine Schmutzdichtung, die ein Eindringen von Staub, Schmutz, Feuchtigkeit (Spritzwasser) und dergleichen verhindern soll, als umlaufende Dichtlippe einstückig angeformt ist. Zum Zwecke der Lösbarkeit des Einsteckteils weist dabei das Einsatzteil zwei elastische Rastarme auf, die mit Rastansätzen in das Basisteil und in dort gebildete Rastöffnungen eingreifen. Jeder Rastarm weist einen aus dem Basisteil nach außen vorstehenden Betätigungsabschnitt auf.

Die Veröffentlichung US 2003/0178846 A1 beschreibt einen Leitungsverbinder, der aus einem rohrförmigen, gebogenen Verbindungskörper aus Kunststoff und einem Anschlussteil aus Metall besteht. Das Anschlussteil ist mit einem Steckabschnitt in den Verbindungskörper eingesteckt, wobei der Steckabschnitt auf seinem Außenumfang einen zahnartigen Ringvorsprung mit einem scharfen Querschnitt aufweist, der in die zylindrische Innenfläche des Verbindungskörpers eingreift bzw. einschneidet Auf der gegenüberliegenden Seite des Verbindungskörpers ist eine Steckaufnahme für eine Leitung gebildet, und innerhalb der Steckaufnahme sind ein Halteelement zum Arretieren sowie eine Mediendichtung zum Abdichten der Leitung angeordnet. Diese Teile werden durch ein eingesetztes, hülsenförmiges Führungsteil gehalten, wobei das Führungsteil - analog zu dem Anschlussteil - auf seinem Außenumfang einen scharfen, zahnförmigen Ringvorsprung aufweist, der in die zylindrische Innenfläche des Verbindungskörpers einschneidet. Somit handelt es sich bei den Verbindungen zwischen dem Anschlussteil und dem Verbindungskörper sowie auch zwischen dem Verbindungskörper und dem eingesetzten Führungsteil um unlösbare, aber gegeneinander verdrehbare Verbindungen. Um ein Lösen der eingesteckten Leitung zu ermöglichen, ist eine zusätzliche Lösehülse vorgesehen, die verschiebbar in die Steckaufnahme eingreift, um durch Einschieben das Halteelement zwecks Freigabe der Leitung zu betätigen.

Der vorliegenden Erfindung liegt die Aufgabe zugrunde, einen Steckverbinder der genannten Art weiter zu verbessern und zu vereinfachen.

Erfindungsgemäß wird dies durch die Merkmale des unabhängigen Patentanspruchs 1 erreicht. Vorteilhafte Ausgestaltungsmerkmale der Erfindung sind in den abhängigen Ansprüchen enthalten.

Demnach ist erfindungsgemäß das Basisteil seinerseits ebenfalls zweiteilig aus einem Aufnahmeteil für das Halteelement, die Mediendichtung und das Einsatzteil sowie aus einem Anschlussteil zur Anschlussverbindung des Gehäuseteils an einer Medienleitung ausgebildet, wobei vorteilhafterweise zwischen dem Aufnahmeteil und dem Anschlussteil Mittel zur Sicherung gegen relatives Verdrehen vorgesehen sind. Vorzugsweise sind Mittel zur Sicherung des gesamten eingesteckten Einsteckteils gegen Verdrehen um die Steckachse relativ zu dem erfindungsgemäßen Steckverbinder vorgesehen. Die Mittel zur Verdrehsicherung sind hierbei von Formschlusselementen derart gebildet, dass die Einzelteile axial montierbar, aber gegen Relatiwerdrehung gesichert sind. Durch die erfindungsgemäße Ausgestaltung eignet sich der Steckverbinder auch für Winkelverbinder, bei denen es auf eine Richtungseinstellbarkeit ankommt.

In einer bevorzugten Ausgestaltung der Erfindung ist vorgesehen, dass innerhalb der Steckaufnahme ausgehend von einer mündungsseitigen Schmutzdichtung in Einsteckrichtung gesehen zunächst das Halteelement zum Arretieren des eingesteckten Einsteckteils und daran anschließend die Mediendichtung angeordnet sind, wobei ein Leckagepfad derart gebildet ist, dass in einer durch das Halteelement arretierten, aber noch nicht über die Mediendichtung abgedichteten Vorarretierstellung des Einsteckteils eine definiert begrenzte, physisch wahmehmbare Undichtigkeit gewährleistet ist. Dadurch soll eine nicht ganz gesteckte, zwar schon arretierte, aber noch nicht korrekt abgedichtete Stellung bemerkbar sein, indem über den Leckagepfad eine Undichtigkeit insbesondere akustisch durch eine Geräuschbildung wahrnehmbar ist. Es ist vorteilhaft, wenn der Leckagepfad durch auf dem Außenumfang des Einsteckteils angeordnete Vertiefungen gebildet ist, die in der Vorarretierstellung einerseits im Bereich der Mediendichtung und andererseits im Bereich der Schmutzdichtung angeordnet sind. Durch diese Ausgestaltung erübrigt sich zur Schaffung des Leckagepfades eine Öffnung des Gehäuseteils, und als Dichtungen (insbesondere für die Mediendichtung) können einfache und preisgünstige O-Ringe verwendet werden. Die Leckage erfolgt dann in der Vorarretierstellung über die jeweilige Vertiefung des Einsteckteils radial innen und axial an dem die Vertiefung überspannenden Dichtring vorbei. In der ganz gesteckten Vollsteckstellung liegen die Dichtungen dann in Umfangsrichtung vollständig auf zylindrischen Dichtabschnitten des Einsteckteils an. Es ergibt sich dadurch eine konstruktiv sehr einfache und kostengünstige Ausführung. Dabei ist das Einsteckteil bevorzugt als. Formteil aus Kunststoff ausgebildet. Dies ermöglicht eine einfache Einformung der Vertiefungen.

Anhand von in der Zeichnung veranschaulichten, bevorzugten Ausführungsbeispielen soll die Erfindung genauer erläutert werden. Dabei zeigen:
- Fig. 1: einen Längsschnitt durh eine nicht erfindungsgemäße Ansführung eines Steckverbinders mit Einsteckteil während des Einsteckvorgangs, d. h. in einer noch nicht ganz eingesteckten Stellung,
- Fig. 2: eine Darstellung analog zu Fig. 1 mit dem in einer Vorarretierstellung befindlichen Elnstecktell unter Druckbeaufschlagung zur Erläuterung des Leckagepfades,
- Fig. 3: eine weitere Darstellung analog zu Fig. 1 bzw. 2 einer Ausführungsvariante mit Verdrehsicherung des Einsteckteils in der ganz gesteckten und abgedichteten Vollsteckstellung,
- Fig. 4: eine Seitenansicht nur des Einsteckteils der Ausführung gemäß Fig. 1 bis 3,
- Fig. 5: eine Perspektivansicht einer Ausführungsform eines erfindungsgemäßen Steckverbinders (ohne Einstecktell),
- Fig. 6: eine vergrößerte Längsschnittdarstellung des erfindungsgemäßen Steckverbinders gemäß Fig. 5 und
- Fig. 7: eine Darstellung analog zu Fig. 6 in einer Ausführungsvariante des erfindungsgemäßen Steckverbinders.

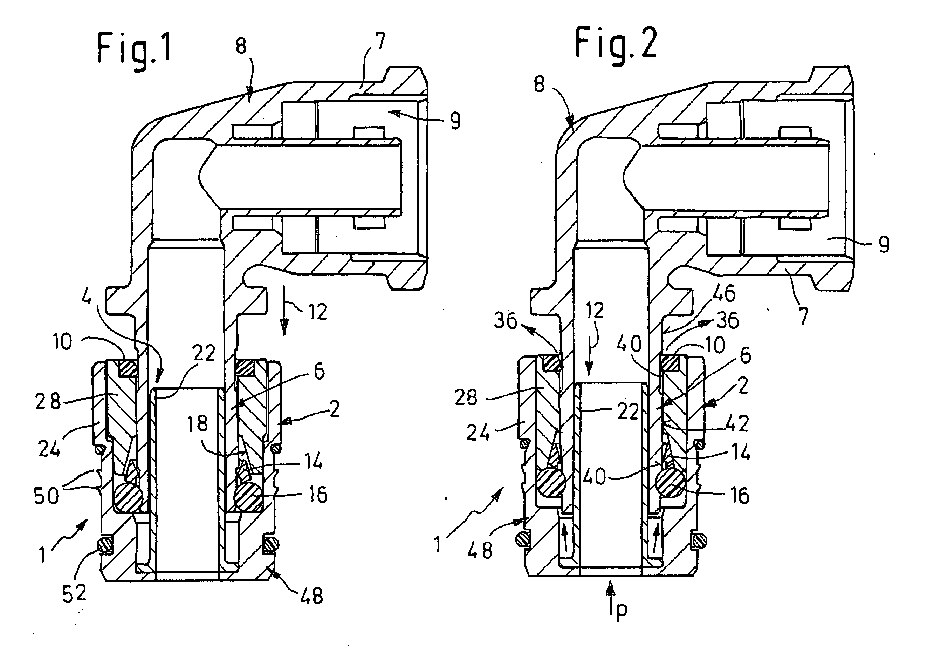

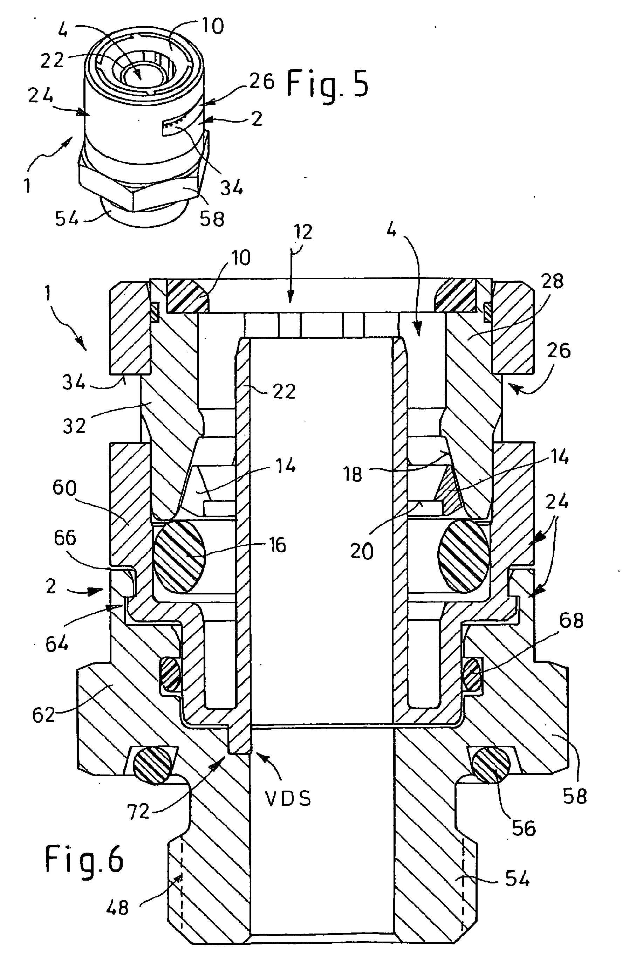

In den verschiedenen Figuren der Zeichnung sind gleiche Teile stets mit den gleichen Bezugszeichen versehen. Daher gilt jede Beschreibung eines Teils unter Bezugnahme auf eine bestimmte Zeichnungsfigur analog auch für alle anderen Zeichnungsfiguren, in denen das besagte Teil mit dem entsprechenden Bezugszeichen ebenfalls zu erkennen ist. Es sei bemerkt, dass nur die Figuren 5 bis 7 dem Anspruch 1 entsprechen, während die Figuren 1 bis 4 nur Teilmerkmale der Erfindung zeigen.

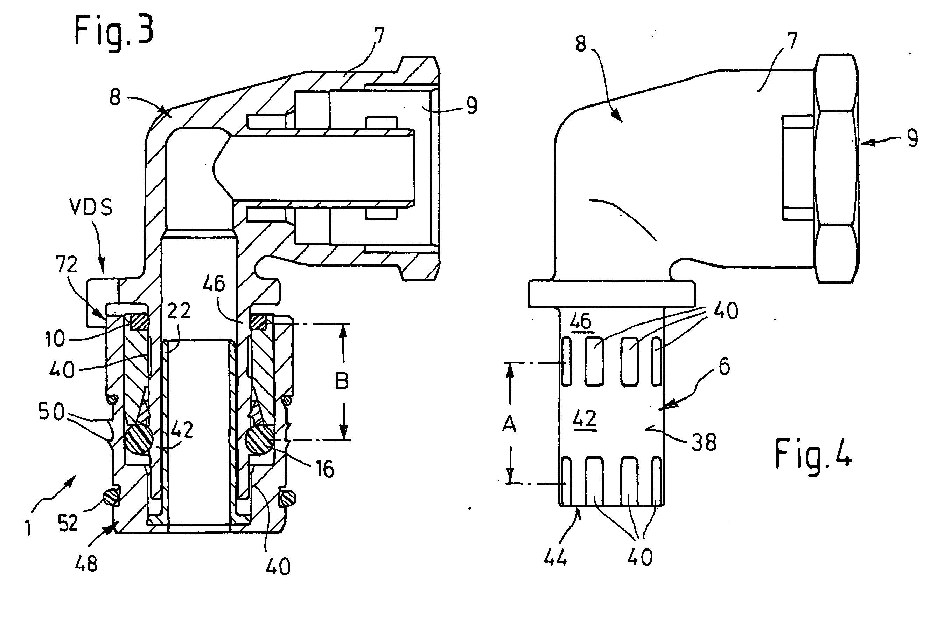

Ein Steckverbinder 1 besteht in allen Ausführungsbeispielen aus einem Gehäuseteil 2 mit (mindestens) einer Steckaufnahme 4 (siehe insbesondere Fig. 5 bis 7) zum axialen, mediendichten Einstecken eines rohrstückförmlgen Einsteckteils 6 (siehe hierzu die gesonderte Darstellung in Fig. 4). Bei diesem Beispiel ist das Einsteckteil 6 als Abschnitt eines Verbinderstückes 8 ausgebildet, welches - wie dargestellt - beispielsweise als Winkelverbinder ausgeführt sein kann. Das Verbinderstück 8 kann auf seiner dem Einsteckteil 6 gegenüberliegenden Seite einen Verbindungsabschnitt 7 aufweisen, der analog zu dem Steckverbinder 1 bzw. dem Gehäuseteil 2 als gleichartige Steckaufnahme 9 ausgebildet sein kann. Bevorzugt wird das Verbinderstück 8 von einem einstückigen Formteil aus Kunststoff gebildet. Grundsätzlich ist der Steckverbinder 1 jedoch auch zum direkten Anschluß von Rohrleitungen geeignet, wobei dann das Einsteckteil 6 von einem Ende der Rohrleitung gebildet ist (nicht dargestellt).

Innerhalb der Steckaufnahme 4 sind ausgehend von einer mündungsseitigen Schmutzdichtung 10 in Einsteckrichtung (Pfeil 12) gesehen zunächst ein Halteelement 14 zum Arretieren des eingesteckten Einsteckteils 6 und in einem sich daran anschließenden Bereich eine Mediendichtung 16 (Druckdichtung) angeordnet. Die Schmutzdichtung 10 und die Mediendichtung 16 kommen unmittelbar zur umfangsgemäßen Anlage auf dem Außenumfang des eingesteckten Einsteckteils 6 (siehe Fig. 3). Das Halteelement 14 ist bevorzugt als geschlitzter und dadurch radial elastischer Klemmring ausgebildet, der zum Arretieren des Einsteckteils 6 so mit einem Innenkonus 18 in der Steckaufnahme 4 zusammenwirkt, dass er durch eine Bewegung entgegen der Einsteckrichtung 12 über den Innenkonus 18 radial nach innen zur klemmenden Halterung des Einsteckteils 6 verformt (verengt) wird. Dabei wirkt er mit mindestens einer radial nach innen ragenden, umlaufenden Zahnkante 20 gegen den Außenumgang des Einsteckteils 6. Dazu wird insbesondere auf die vergrößerte Darstellung in Fig. 6 verwiesen. Durch diese Ausgestaltung wird durch eine Bewegung des zuvor eingesteckten Einsteckteils 6 zurück in Löserichtung das Halteelement 14 bzw. der Klemmring zunächst durch kraftschlüssige Anlage seiner Zahnkante 20 mitgenommen, bis er mit seinem Außenkonus zur Anlage in dem Innenkonus 18 des Gehäuseteils 2 gelangt. Bei weitergehendem Zug wird über die Konen eine radial nach innen gerichtete Kraft erzeugt, durch die der Klemmring elastisch verengt wird, so dass die Zahnkante 20 kraft- und/oder formschlüssig mit dem im Wesentlichen glattflächigen, zylindrischen Außenumfang des Einsteckteils 6 zusammenwirkt und dieses so gegen Herausziehen arretiert wird.

In weiterer bevorzugter Ausgestaltung ist innerhalb des Gehäuseteils 2 eine zur Steckachse koaxiale Stützhülse 22 zum kraftschlüssigen, spielfreien Eingriff in das eingesteckte Einsteckteil 6 angeordnet. Die Stützhülse 22 stützt somit das aufgesteckte Einsteckteil 6 einerseits gegen die über das Halteelement 14 aufgebrachte Radialkraft und andererseits auch gegen die Anlagekraft der Mediendichtung 16 von innen her radial ab. Dadurch ist der Steckverbinder 1 grundsätzlich auch für Schlauchleitungen geeignet.

Zum Zwecke der Herstellbarkeit bzw. Montierbarkeit des Steckverbinders 1 ist das Gehäuseteil 2 zweiteilig aus einem Basisteil 24 und einem mit diesem über eine schnappbare Formschlußverbindung 26 (formschlüssige Rastverbindung mit einem Wirkflächen-Hinterschneidungswinkel größer/gleich 90°; siehe dazu insbesondere Fig. 5 bis 7) verbundenen, den Innenkonus 18 aufweisenden Einsatzteil 28 ausgebildet. Dabei weist das Einsatzteil 28 die Schmutzdichtung 10 zur umfangsgemäßen Anlage auf dem eingesteckten Einsteckteil 6 auf.

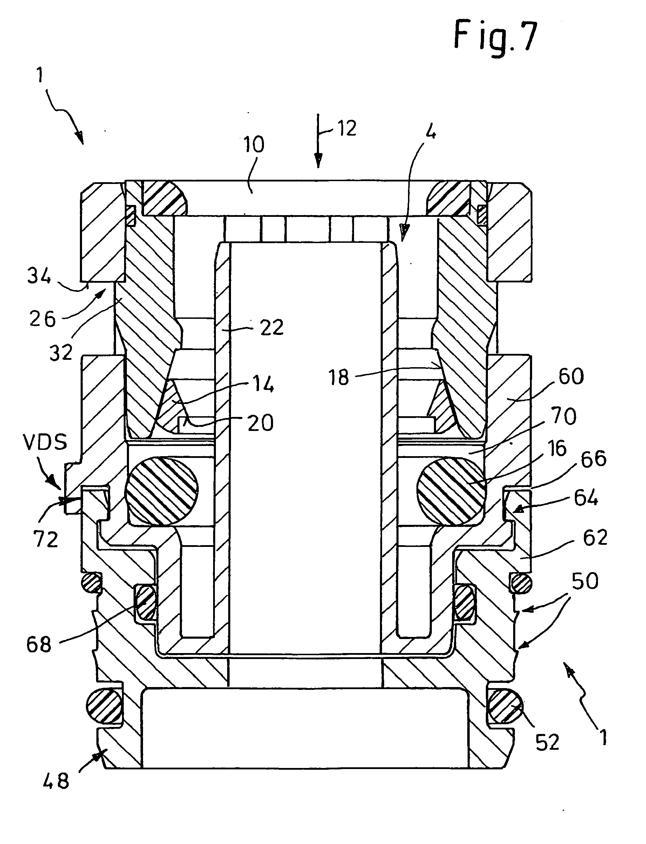

Das Einsatzteil 28 ist gemeinsam mit der Schmutzdichtung 10 als einstückiges Zweikomponenten-Formteil aus zwei unterschiedlichen Kunststoff-Materialien ausgebildet, und zwar besteht das Einsatzteil 28 aus einem ersten, relativ härteren und formstabilen Kunststoff, während die Schmutzdichtung 10 unmittelbar einstückig materialschlüssig aus einem zweiten, relativ weicheren und elastischen Kunststoff angeformt ist. Hierbei weist die Schmutzdichtung 10, siehe dazu insbesondere Fig. 6 und 7, auf ihrer radial nach innen weisenden Seite einen wulstartigen Dichtungsbereich zur umfangsgemäßen Auflage auf dem Einsteckteil 6 auf.

Das Einsatzteil 28 ist gemeinsam mit der Schmutzdichtung 10 insgesamt im Wesentlichen hülsenförmig ausgebildet und in eine Erweiterung der Steckaufnahme 4 des Basisteils 24 vorzugsweise mit Presspassung und dadurch zumindest gegen Eindringen von Schmutz und dergleichen Fremdstoffen dichtend eingesetzt bzw. einsetzbar. Es ist vorteilhaft, wenn das Einsatzteil 28 im eingesetzten Zustand mündungsseitig bündig abschließend vollständig innerhalb des Basisteils 24 liegt. Daraus resultiert eine kompakte Bauform des Steckverbinders 1, der mündungsseitig eine ebene, über die Schmutzdichtung 10 zum Einsteckteil 6 hin geschlossene Stirnfläche aufweist.

Bei der schnappbaren Formschlußverbindung 26 kann es sich um eine in Umfangsrichtgung umlaufende, geschlossene Ausführung von Rastelementen handeln (nicht dargestellt), was wegen des erreichten Formschlusses zu einer Unlösbarkeit des Einsteckteils 6 führt.

Im Gegensatz dazu ist allerdings bei den dargestellten Ausführungsformen zwecks Lösbarkeit des Einsteckteils 6 vorgesehen, dass das hülsenförmige Einsatzteil 28 mindestens zwei durch Längsschlitze gebildete, radialelastische Federarme aufweist (in den Zeichnungen nicht erkennbar). Jeder Federarm greift mit einem radial nach außen ragenden, nasenartigen Rastansatz 32 formschlüssig, d. h. mit Hinterschneidung größer/gleich 90°, in eine korrespondierende Rastöffnung 34 des Basisteils 24 lösbar ein (siehe Fig. 5 bis 7). Die Rastöffnungen 34 sind als radiale Durchgangsöffnungen ausgebildet, so dass die Rastansätze 32 zum Lösen von außen mit einem geeigneten Werkzeug erreicht und radial nach innen bewegt werden können, wodurch das Einsteckteil 6 gemeinsam mit dem Halteelement 14 und dem Einsatzteil 28 entnommen werden kann.

Aufgrund der beschriebenen Ausgestaltung und Anordnung des Halteelementes 14 und der Mediendichtung 16 arbeitet der erfindungsgemäße Steckverbinder 1 nach dem Steckprinzip "Halten vor Dichten", weil das Einsteckteil 6 beim Einstecken zunächst in den Bereich des Halteelementes 14 und erst danach in den Bereich der Mediendichtung 16 gelangt. Dadurch kann das Einsteckteil 6 bereits über das Halteelement 14 gegen Lösen arretiert werden, bevor die Verbindung über die Mediendichtung 16 abgedichtet ist. Aus diesem Grund ist ein Leckagepfad derart gebildet, dass in seiner solchen, durch das Halteelement 14 arretierten, aber noch nicht über die Mediendichtung 16 abgedichteten Vorarretierstellung des Einsteckteils 6 eine definiert begrenzte, physisch wahrnehmbare Undichtigkeit gewährleistet ist. Dies ist in Fig. 2 durch Pfeile 36 angedeutet.

Gemäß Fig. 1 bis 4 ist der Leckagepfad durch auf dem Außenumfang 38 des Einsteckteils 6 angeordnete bzw. den zylindrischen Außenumfang 38 unterbrechende Vertiefungen 40 gebildet, siehe dazu insbesondere Fig. 4. Diese Vertiefungen 40 sind in der Vorarretierstellung (Fig. 2) einerseits im Bereich der Mediendichtung 16 und andererseits im Bereich der Schmutzdichtung 10 angeordnet. Im Falle einer Druckbeaufschlagung (Druck p) kann somit über den von den Vertiefungen 40 gebildeten Leckagepfad und damit an den Dichtungen 16, 10 vorbei das jeweilige Medium in Pfeilrichtung 36 entweichen, was sich durch ein Geräusch (zischen, pfeifen) bemerkbar macht.

Wie sich weiterhin aus Fig. 4 ergibt, sind die Vertiefungen 40 bevorzugt in zwei Gruppen zu je mehreren über den Umfang radialsymmetrisch verteilt angeordneten und axial über einen zylindrischen Mediendichtabschnitt 42 beabstandeten Vertiefungen 40 angeordnet. Jede Gruppe von Vertiefungen 40 besteht aus insbesondere etwa zehn bis fünfzehn, vorzugsweise z.B. zwölf Vertiefungen 40. An die von einem vorderen Einsteckende 44 des Einsteckteils 6 entfernt liegenden, der Schmutzdichtung 10 zugeordneten Vertiefungen 40 schließt sich auf der dem Mediendichtabschnitt 42 gegenüberliegenden Seite ein ebenfalls zylindrischer Schmutzdichtabschnitt 46 an. Die der Mediendichtung 16 zugeordneten Vertiefungen 40 gehen bevorzugt vom vorderen Einsteckende 44 des Einsteckteils 6 aus. Alle Vertiefungen 40 weisen bevorzugt jeweils eine in Einsteckrichtung 12 ausgerichtete längliche, insbesondere etwa rechteckige Form auf. Gemäß Fig. 3 und 4 entspricht der axiale Mittenabstand A der Vertiefungen 40 der beiden Gruppen zumindest annähernd dem axialen Abstand B zwischen Mediendichtung 16 und Schmutzdichtung 10.

Grundsätzlich kann der Steckverbinder 1 unmittelbarer Bestandteil eines beliebigen Aggregateteils, beispielsweise eines Ventilblocks, sein. In den dargestellten Ausführungen ist aber das Gehäuseteil 2 über (mindestens) einen Verbindungsabschnitt 48 mit einem weiteren beliebigen Aggregateteil (nicht dargestellt) verbindbar.

Bei den Ausführungen gemäß Fig. 1 bis 3 sowie 7 ist das Gehäuseteil 2 als Einpreßpatrone ausgebildet, wobei der als Einsteckabschnitt ausgebildete Verbindungsabschnitt 48 in eine Anschlußöffnung eines nicht dargestellten Aggregateteils einsetzbar (einpreßbar) ist. Bei der Anschlußöffnung kann es sich um eine einfache, glattwandige Bohrung handeln, wozu dann der Verbindungsabschnitt 48 zahnartige Halteelemente 50 sowie mindestens einen Dichtring 52 aufweist. Alternativ dazu ist bei der Ausführung gemäß Fig. 6 vorgesehen, dass der Verbindungsabschnitt 48 als Schraubgewindestutzen 54 ausgebildet ist. Dabei ist ein zusätzlicher Dichtring 56 insbesondere als Axialdichtung vorgesehen sowie zur Drehmomenteinleitung beim Verschrauben des Schraubgewindestutzen 54 ein Außensechskant 58.

Bei den Ausführungen gemäß Fig. 5 bis 7 ist dabei weiterhin erfindungsgemäß vorgesehen, dass das Basisteil 24 nochmals zweiteilig aus einem Aufnahmeteil 60 für das Halteelement 14, die Mediendichtung 16 und für das Einsatzteil 28 sowie aus einem Anschlußteil 62 zur Anschlußverbindung des Gehäuseteils 2 besteht. Dazu weist das Anschlußteil 62 den oben erwähnten Verbindungsabschnitt 48 auf.

Durch diese erfindungsgemäße Ausgestaltung kann vorteilhafterweise das Aufnahmeteil 60 mit einer stets gleichen Ausgestaltung wahlweise mit verschiedenen, adapterartigen Anschlußteilen 62 verbunden werden, so dass eine Art Baukastensystem geschaffen wird. Der Verbindungsbereich zwischen Aufnahmeteil 60 und Anschlußteil 62 ist dabei stets gleich ausgebildet, wohingegen der Anschlußbereich mit unterschiedlichen Verbindungsabschnitten 48 ausgeführt sein kann; vergleiche Fig. 6 und 7.

Vorzugsweise sind das Aufnahmeteil 60 und das Anschlußteil 62 über eine schnappbare Formschlußverbindung 64 insbesondere unlösbar miteinander verbunden. Dazu ist die Formschlußverbindung 64 mit einem umfangsgemäß geschlossenen Linienverlauf ausgebildet. Die Teile 60, 62 sind dadurch auf einfache Weise zusammensteckbar und verrastbar, nachfolgend aber nicht, jedenfalls nicht zerstörungsfrei trennbar. Zweckmäßig sind die Teile im Verbindungsbereich so ausgeführt, dass ihre äußeren Konturen axial über einen Spalt 66 fluchtend ineinander übergehen. In ihrem zusammengesteckten Bereich ist ein Ringspalt zwischen dem Aufnahmeteil 60 und dem Anschlußteil 62 über eine Dichtung 68 mediendicht abgedichtet.

Das Aufnahmeteil 60 besteht vorzugsweise aus Kunststoff, während das Anschlußteil 62 insbesondere aus Metall, beispielsweise Messing, besteht.

Die Mediendichtung 16 ist in einer inneren Ringkammer 70 angeordnet, die zwischen dem Basisteil 24 bzw. dem Aufnahmeteil 60 und dem Einsatzteil 28 gebildet ist.

Die oben erwähnte Stützhülse 22 kann mit Vorteil einstückig mit dem Aufnahmeteil 60 ausgebildet sein (Fig. 6 und 7). Bei der Ausführung gemäß Fig. 1 bis 3 ist die Stützhülse 22 als separates Teil in das Basisteil 24 eingesetzt.

In weiterer Ausgestaltung der Erfindung sind Mittel zur Sicherung des Einsteckteils 6 gegen Verdrehen um die Steckachse vorgesehen. Diese Mittel zur Verdrehsicherung sind in der Zeichnung mit VDS bezeichnet (siehe hierzu insbesondere die Fig. 3, 6 und 7). Diese Verdrehsicherung VDS ist insbesondere bei Winketverbindern von Bedeutung (Richtungseinstellbarkeit). Die Mittel zur Verdrehsicherung VDS sind von Formschlußelementen 72 derart gebildet, dass die jeweiligen Einzelteile axial montierbar (zusammensteckbar), aber gegen Relatiwerdrehung formschlüssig gesichert sind. Einerseits ist das Einsteckteil 6 bzw. das Verbinderstück 8 über solche Formschlußelemente 72 mit dem Gehäuseteil 2 verbunden, wobei es sich gemäß Fig. 3 um einen das Gehäuse 2 übergreifenden Abschnitt des Einsteckteils 6 mit einem Sechskant- oder Velzahneingriff handeln kann. Bei der zweiteiligen Ausführung des Basisteils 24 gemäß Fig. 6 und 7 muß auch zwischen dem Aufnahmeteil 60 und dem Anschlußteil 62 eine Verdrehsicherung durch entsprechende Formschlußelemente 72 vorgesehen sein. Gemäß Fig. 6 kann es sich um innere Formschlußelemente 72 handeln, die in einem inneren Einsteckbereich der beiden Teile 60, 62 angeordnet sind. Gemäß Fig. 7 handelt es sich um äußere übergreifende Formschlußelemente 72. Eine außenliegende Verdrehsicherung VDS läßt sich fertigungstechnisch leichter reallsieren. Eine innenliegenden VDS hat den Vorteil einer sehr kompakten Bauweise ohne außen überstehende Teile. Bei der Ausführung des Gehäuses 2 als Einpreßpatrone (Fig. 1 bis 3 und 7) muß zusätzlich eine weitere, nicht dargestellte Verdrehsicherung VDS im Zusammenwirken mit dem jeweiligen Aggregateteil, insbesondere im Bereich des Verbindungsabschnittes 48 vorgesehen sein.

## Patentansprüche

1. Steckverbinder (1) für Medienleitungen,
bestehend aus einem Gehäuseteil (2) mit einer Steckaufnahme (4) zum mediendichten Einstecken eines rohrstückförmigen Einsteckteils (6), wobei in der Steckaufnahme (4) ein Halteelement (14) zum Arretieren sowie eine Mediendichtung (16) zum Abdichten des eingesteckten Einsteckteils (6) angeordnet sind, und wobei das Gehäuseteil (2) zum Zwecke der Montage und Demontage des Halte-elementes (14) und der Mediendichtung (16) sowie zum Lösen des Einsteckteils (6) zweiteilig aus einem Basisteil (24) und einem mit diesem über eine schnappbare Formschlußverbindung (26) lösbar verbundenen Einsatzteil (28) besteht,
**dadurch gekennzeichnet, dass** das Basisteil (24) seinerseits ebenfalls zweiteilig aus einem Aufnahmeteil (60) für das Halteelement (14) , die Mediendichtung (16) und das Einsatzteil (28) sowie aus einem Anschlußteil (62) zur Anschlußverbindung des Gehäuseteils (2) an eine Medienleitung besteht, wobei das Aufnahmeteil (60) und das Anschlussteil (62) aus unterschiedlichen Materialien bestehen und zwischen dem Aufnahmetell (60) und dem Anschlussteil (62) Mittel (VDS) zur Sicherung gegen relatives Verdrehen vorgesehen sind.

2. Steckverbinder nach Anspruch 1 mit einem eingesteckten Einsteckteil (6),
**gekennzeichnet durch** Mittel (VDS) zur Sicherung des eingesteckten Einsteckteils (6) gegen Verdrehen um die Steckachse.

3. Steckverbinder nach Anspruch 1 oder 2,
**dadurch gekennzeichnet, dass** die Mittel zur Verdrehsicherung (VDS) von Formschlußelementen (72) derart gebildet sind, dass die Einzelteile axial montierbar, aber gegen Relatiwerdrehung gesichert sind.

4. Steckverbinder nach einem der Ansprüche 1 bis 3,
**dadurch gekennzeichnet, dass** das Aufnahmeteil (60) und das Anschlußteil (62) über eine - insbesondere umfangsgemäß geschlossene - schnappbare Formschlußverbindung (64) miteinander verbunden sind.

5. Steckverbinder nach einem der Ansprüche 1 bis 4,
**dadurch gekennzeichnet, dass** ein Ringspalt (66) zwischen dem Aufnahmeteil (60) und dem Anschlußteil (62) über eine Dichtung (68) mediendicht abgedichtet ist.

6. Steckverbinder nach einem der Ansprüche 1 bis 5,
**dadurch gekennzeichnet, dass** das Aufnahmeteil (60) mit einer stets gleichen Ausgestaltung wahlweise mit verschiedenen, adapterartigen Anschlußteilen (62) verbindbar ist.

7. Steckverbinder nach einem der Ansprüche 1 bis 6,
**dadurch gekennzeichnet, dass** das Aufnahmeteil (60) aus Kunststoff und das Anschlußteil (62) insbesondere aus Metall bestehen.

8. Steckverbinder nach einem der Ansprüche 1 bis 7,
**dadurch gekennzeichnet, dass** das Halteelement (14) als geschlitzter, radialelastischer Klemmring ausgebildet ist, der zum Arretieren des Einsteckteils (6) mit einem Innenkonus (18) in der Steckaufnahme (4) zusammenwirkt, wobei der Innenkonus (18) in dem Einsatzteil (28) gebildet ist.

9. Steckverbinder nach einem der Ansprüche 1 bis 8,
**dadurch gekennzeichnet, dass** die Mediendichtung (16) in einer Ringkammer (70) zwischen dem Basisteil (24) bzw. dem Aufnahmeteil (60) und dem Einsatzteil (28) angeordnet ist.

10. Steckverbinder nach einem der Ansprüche 1 bis 9 mit einem eigesteckten Einsteckteil (6),
**dadurch gekennzeichnet, dass** innerhalb der Steckaufnahme (4) ausgehend von einer mündungsseitigen Schmutzdichtung (10) in Einsteckrichtung (12) gesehen zunächst das Halteelement (14) zum Arretieren des eingesteckten Einsteckteil (6) und daran anschließend die Mediendichtung (16) angeordnet sind, wobei ein Leckagepfad derart gebildet ist, dass in einer durch das Halteelement (14) arretierten, aber noch nicht über die Mediendichtung (16) abgedichteten Vorarretierstellung des Einsteckteils (6) eine definiert begrenzte, physisch wahmehmbare Undichtigkeit gewährleistet ist.

11. Steckverbinder mit dem eingesteckten Einsteckteil (6) nach Anspruch 10,
**dadurch gekennzeichnet, dass** der Leckagepfad durch auf dem Außenumfang (38) des Einsteckteils (6) angeordnete Vertiefungen (40) gebildet ist, die in der Vorarretlerstellung einerseits im Bereich der Mediendichtung (16) und andererseits im Bereich der Schmutzdichtung (10) angeordnet sind.

12. Steckverbinder mit dem eingesteckten Einsteckteil (6) nach Anspruch 11,
**dadurch gekennzeichnet, dass** die Vertiefungen (40) in zwei Gruppen zu je mehreren, über den Umfang verteilt angeordnet und axial über einen zylindrischen Mediendichtabschnitt (42) beabstandeten Vertiefungen (40) angeordnet sind.

13. Steckverbinder mit dem eingesteckten Einsteckteil (6) nach Anspruch 12,
**dadurch gekennzeichnet, dass** sich an die von einem vorderen Einsteckende (44) des Einsteckteils (6) entfernt liegenden, der Schmutzdichtung (10) zugeordneten Vertiefungen (40) auf der dem Mediendichtabschnitt (42) gegenüberliegenden Seite ein zylindrischer Schmutzdichtabschnitt (46) anschließt.

14. Steckverbinder mit dem eingesteckten Einsteckteil (6) nach einem der Ansprüche 11 bis 13,
**dadurch gekennzeichnet, dass** die der Mediendichtung (16) zugeordneten Vertiefungen (40) vom vorderen Einsteckende (44) des Einsteckteils (6) ausgehen.

15. Steckverbinder mit dem eingesteckten Einsteckteil (6) nach einem der Ansprüche 11 bis 14,
**dadurch gekennzeichnet, dass** die Vertiefungen (40) jeweils eine in Einsteckrichtung (12) ausgerichtete längliche, insbesondere etwa rechteckige Form aufweisen.

16. Steckverbinder mit dem eingesteckten Einsteckteil (6) nach einem der Ansprüche 11 bis 15,
**dadurch gekennzeichnet, dass** der axiale Mittenabstand (A) der Vertiefungen (40) dem axialen Abstand (B) zwischen Mediendichtung (16) und Schmutzdichtung (10) zumindest annähemd entspricht.

## Claims

1. Plug connector (1) for media conduits,
comprising a housing part (2) with a plug socket (4) for the media-tight plugging-in of a plug-in part (6) in the form of a pipe piece, a holding element (14) for locking and a media seal (16) for sealing the plugged-in plug-in part (6) being arranged in the plug socket (4), and the housing part (2), for the purpose of mounting and demounting the holding element (14) and the media seal (16) and for releasing the plug-in part (6), being in two parts comprising a base part (24) and an insert part (28) which is connected releasably to the base part (24) via a snap-action form-locked connection (26),
**characterised in that** the base part (24), for its part, is likewise in two parts comprising a receiving part (60) for the holding element (14), the media seal (16) and the insert part (28), and a joining part (62) for the joining connection of the housing part (2) to a media conduit, the receiving part (60) and the joining part (62) being composed of different materials, and means (VDS) for securing against relative rotation being provided between the receiving part (60) and the joining part (62).

2. Plug connector according to Claim 1 with a plugged-in plug-in part (6), **characterised by** means (VDS) for securing the plugged-in plug-in part (6) against rotation about the plug-in axis.

3. Plug connector according to Claim 1 or 2, **characterised in that** the means for rotational securing (VDS) are formed by form-locked elements (72) in such a manner that the individual parts can be mounted axially but are secured against relative rotation.

4. Plug connector according to one of Claims 1 to 3, **characterised in that** the receiving part (60) and the joining part (62) are connected to each other via a - in particular circumferentially closed - snap-action form-locked connection (64).

5. Plug connector according to one of Claims 1 to 4, **characterised in that** an annular gap (66) between the receiving part (60) and the joining part (62) is sealed off in a media-tight manner via a seal (68).

6. Plug connector according to one of Claims 1 to 5, **characterised in that** the receiving part (60), with a configuration which is always the same, can be connected to different adapter-like joining parts (62), according to choice.

7. Plug connector according to one of Claims 1 to 6, **characterised in that** the receiving part (60) is composed of plastic and the joining part (62) is composed in particular of metal.

8. Plug connector according to one of Claims 1 to 7, **characterised in that** the holding element (14) is formed as a slotted, radially elastic clamping ring which interacts with an internal cone (18) in the plug socket (4) to lock the plug-in part (6), the internal cone (18) being formed in the insert part (28).

9. Plug connector according to one of Claims 1 to 8, **characterised in that** the media seal (16) is arranged in an annular chamber (70) between the base part (24) or the receiving part (60) and the insert part (28).

10. Plug connector according to one of Claims 1 to 9 with a plugged-in plug-in part (6),
**characterised in that**, as seen in the plug-in direction (12) starting from a dirt seal (10) on a mouth side, first of all the holding element (14) for locking the plugged-in plug-in part (6) and, adjoining the holding element (14), the media seal (16) are arranged within the plug socket (4), with a leakage path being formed in such a manner that, in a pre-locking position of the plug-in part (6), which position is locked by the holding element (14) but is not yet sealed via the media seal (16), a physically perceptible leakage which is limited in a defined manner is ensured.

11. Plug connector with the plugged-in plug-in part (6) according to Claim 10, **characterised in that** the leakage path is formed by depressions (40) which are arranged on the outer circumference (38) of the plug-in part (6) and, in the pre-locking position, are arranged on the one hand in the region of the media seal (16) and on the other hand in the region of the dirt seal (10).

12. Plug connector with the plugged-in plug-in part (6) according to Claim 11, **characterised in that** the depressions (40) are arranged in two groups each with a plurality of depressions (40) which are distributed over the circumference and are spaced apart axially via a cylindrical media-sealing section (42).

13. Plug connector with the plugged-in plug-in part (6) according to Claim 12, **characterised in that**, on the side opposite the media-sealing section (42), a cylindrical dirt-sealing section (46) adjoins the depressions (40) which are situated away from a front plug-in end (44) of the plug-in part (6) and are assigned to the dirt seal (10).

14. Plug connector with the plugged-in plug-in part (6) according to one of Claims 11 to 13,
**characterised in that** the depressions (40) assigned to the media seal (16) start from the front plug-in end (44) of the plug-in part (6).

15. Plug connector with the plugged-in plug-in part (6) according to one of Claims 11 to 14,
**characterised in that** the depressions (40) each have an elongate, in particular approximately rectangular shape oriented in the plug-in direction (12).

16. Plug connector with the plugged-in plug-in part (6) according to one of Claims 11 to 15,
**characterised in that** the axial centre distance (A) between the depressions (40) corresponds at least approximately to the axial distance (B) between media seal (16) and dirt seal (10).

## Revendications

1. Raccord à emboîtement (1) pour conduites de fluide, comprenant une partie de boîtier (2) avec un logement d'emboîtement (4) pour l'emboîtement étanche aux fluides d'une partie à emboîtement (6) en forme de bout de tube, un élément de retenue (14) pour le verrouillage et un joint à fluide (16) pour l'étanchéité de la partie à emboîtement (6) emboîtée étant disposés dans le logement d'emboîtement (4), et la partie de boîtier (2) pour le montage et le démontage de l'élément de retenue (14) et de la conduite de fluide (16) et pour le détachement de la partie à emboîtement (6) étant constituée de deux parties, une partie de base (24) et une partie d'insertion (28) reliée de façon amovible à la première partie au moyen d'une liaison à fermeture mécanique (26) encliquetable,
**caractérisé en ce que** la partie de base (24) est constituée pour sa part également de deux parties, une partie de logement (60) pour l'élément de retenue (14), la conduite de fluide (16) et la partie d'insertion (28) et une partie de raccordement (62) pour la liaison de raccordement de la partie de boîtier (2) à une conduite de fluide, la partie de logement (60) et la partie de raccordement (62) étant à base de différents matériaux et des moyens (VDS) pour le blocage contre une rotation relative étant prévus entre la partie de logement (60) et la partie de raccordement (62).

2. Raccord à emboîtement selon la revendication 1, comprenant une partie à emboîtement (6) emboîtée,
**caractérisé par** des moyens (VDS) pour le blocage de la partie à emboîtement (6) emboîtée contre une rotation autour de l'axe d'emboîtement.

3. Raccord à emboîtement selon la revendication 1 ou 2,
**caractérisé en ce que** les moyens pour le blocage en rotation (VDS) sont formés par des éléments à fermeture mécanique (72), de telle sorte que les pièces individuelles peuvent être montées axialement, mais sont bloquées contre un déplacement relatif.

4. Raccord à emboîtement selon l'une quelconque des revendications 1 à 3,
**caractérisé en ce que** la partie de logement (60) et la partie de raccordement (62) sont reliées l'une à l'autre au moyen d'une liaison à fermeture mécanique (64) encliquetable, en particulier fermée sur le pourtour.

5. Raccord à emboîtement selon l'une quelconque des revendications 1 à 4,
**caractérisé en ce qu'**une fente annulaire (66) entre la partie de logement (60) et la partie de raccordement (62) est rendue étanche aux fluides au moyen d'un joint (68).

6. Raccord à emboîtement selon l'une quelconque des revendications 1 à 5,
**caractérisé en ce que** la partie de logement (60) avec une conception toujours identique peut être reliée au choix à des parties de raccordement (62) différentes et de type adaptateur.

7. Raccord à emboîtement selon l'une quelconque des revendications 1 à 6,
**caractérisé en ce que** la partie de logement (60) est à base de matière synthétique et la partie de raccordement (62) en particulier à base de métal.

8. Raccord à emboîtement selon l'une quelconque des revendications 1 à 7,
**caractérisé en ce que** l'élément de retenue (14) est conçu sous forme de bague de serrage fendue et radialement élastique, qui coopère avec un cône intérieur (18) dans le logement d'emboîtement (4) pour le verrouillage de la partie à emboîtement (6), le cône intérieur (18) étant formé dans la pièce d'insertion (28).

9. Raccord à emboîtement selon l'une quelconque des revendications 1 à 8,
**caractérisé en ce que** le joint à fluide (16) est disposé dans une chambre annulaire (70) entre la partie de base (24) ou la partie de logement (60) et la partie d'insertion (28).

10. Raccord à emboîtement selon l'une quelconque des revendications 1 à 9, comprenant une partie à emboîtement (6) emboîtée,
**caractérisé en ce que** d'abord l'élément de retenue (14) pour le verrouillage de la partie à emboîtement (6) emboîtée et, se raccordant dessus, la conduite à fluide (16) sont disposés à l'intérieur du logement d'emboîtement (4), vus à partir d'un joint à poussière (10) côté ouverture dans le sens d'emboîtement (12), un chemin de fuite étant formé de telle sorte qu'un défaut d'étanchéité limité de façon définie et perceptible physiquement est garanti lorsque la partie à emboîtement (6) se trouve dans une position de pré-verrouillage verrouillée par l'élément de retenue (14), mais non encore étanchéifiée par le joint à fluide (16).

11. Raccord à emboîtement avec la partie à emboîtement (6) emboîtée selon la revendication 10,
**caractérisé en ce que** le chemin de fuite est formé par des cavités (40) disposées sur le contour extérieur (38) de la partie à emboîtement (6), lesquelles sont disposées dans la position de pré-verrouillage d'une part dans la zone du joint à fluide (16) et d'autre part dans la zone du joint à poussière (10).

12. Raccord à emboîtement avec la partie à emboîtement (6) emboîtée selon la revendication 11,
**caractérisé en ce que** les cavités (40) sont disposées dans deux groupes formés chacun de plusieurs cavités (40) disposées et réparties sur le pourtour et espacées axialement au moyen d'une partie cylindrique étanché aux fluides (42).

13. Raccord à emboîtement avec la partie à emboîtement (6) emboîtée selon la revendication 12,
**caractérisé en ce qu'**une partie cylindrique étanche à la poussière (46) se raccorde aux cavités (40) éloignées d'une extrémité d'emboîtement (44) avant de la partie à emboîtement (6) et associées au joint à poussière (10) sur le côté opposé à la partie étanche aux fluides (42).

14. Raccord à emboîtement avec la partie à emboîtement (6) emboîtée selon l'une quelconque des revendications 11 à 13,
**caractérisé en ce que** les cavités (40) associées au joint à fluide (16) partent de l'extrémité d'emboîtement (44) avant de la partie à emboîtement (6).

15. Raccord à emboîtement avec la partie à emboîtement (6) emboîtée selon l'une quelconque des revendications 11 à 14,
**caractérisé en ce que** les cavités (40) présentent chacune une forme allongée, dirigée dans le sens d'emboîtement (12), en particulier à peu près rectangulaire.

16. Raccord à emboîtement avec la partie à emboîtement (6) emboîtée selon l'une quelconque des revendications 11 à 15,
**caractérisé en ce que** la distance axiale de centre à centre (A) des cavités (40) correspond au moins approximativement à la distance (B) axiale entre le joint à fluide (16) et le joint à poussière (10).
